# EUROPÄISCHE PATENTSCHRIFT

(11) **EP 3 114 554 B1**
(45) Veröffentlichungstag und Bekanntmachung des Hinweises auf die Patenterteilung: **17.06.2020**
(21) Anmeldenummer: 14707753.1
(22) Anmeldetag: 03.03.2014
(51) Int. Cl.: G06F 3/0488

(54) **VERFAHREN UND VORRICHTUNG ZUM BEREITSTELLEN EINER GRAPHISCHEN BENUTZERSCHNITTSTELLE IN EINEM FAHRZEUG**
METHOD AND APPARATUS FOR PROVIDING A GRAPHICAL USER INTERFACE IN A VEHICLE
PROCÉDÉ ET DISPOSITIF POUR METTRE À DISPOSITION UNE INTERFACE UTILISATEUR GRAPHIQUE DANS UN VÉHICULE

(43) Veröffentlichungstag der Anmeldung: 11.01.2017
(73) Patentinhaber: VOLKSWAGEN AG, 38440 Wolfsburg (DE)
(72) Erfinder: KUHN, Mathias, 14129 Berlin (DE); KÖGLER, Indra-Lena, 10829 Berlin (DE); HAHN, Alexander, 38104 Braunschweig (DE)
(86) Internationale Anmeldenummer: PCT/EP2014/054071
(87) Internationale Veröffentlichungsnummer: WO 2015/131921

(56) Entgegenhaltungen:
- FR-A1- 2 971 878
- US-A1- 2003 128 103
- US-A1- 2008 211 693

## Beschreibung

Die vorliegende Erfindung betrifft ein Verfahren und eine Vorrichtung zum Bereitstellen einer graphischen Benutzerschnittstelle in einem Fahrzeug.
Es ist bekannt in Fahrzeugen Anzeigevorrichtungen bereitzustellen, deren Anzeigeflächen verkleinert werden können. Eine Verkleinerung der Anzeigefläche geschieht dabei häufig darüber, dass die Anzeigevorrichtungen in ein Bauteil des Fahrzeugs, häufig das Armaturenbrett, versenkt werden. Weist ein Fahrzeug eine solche versenkbare Anzeigevorrichtung auf, so steht im versenkten Zustand der Anzeigevorrichtung nur noch eine kleinere Anzeigefläche zur Verfügung. Auf dieser verkleinerten Anzeigefläche können dann nur noch wenige Anzeigeinhalte angezeigt werden. Alternativ können zwar noch immer alle Anzeigeinhalte angezeigt werden. Diese müssen dann allerdings verkleinert dargestellt werden. Dies kann jedoch dazu führen, dass die Anzeigeinhalte nur noch schwer zu erkennen sind.
Die US 2003/0128103 A1 beschreibt ein einfahrbares Display, welches zwei Teilanzeigen aufweist. Die erste Teilanzeige ist dabei im eingefahrenen und ausgefahrenen Zustand des Displays und die zweite Teilanzeige nur im ausgefahrenen Zustand des Displays sichtbar. Auf der ersten Teilanzeige werden dann hauptsächlich Anzeigeinhalte der Grundfunktionen des Fahrzeugs, wie beispielsweise Temperatur, Lüftungsstärke oder ein Radiosender angezeigt. Auf der zweiten Teilanzeige werden hauptsächlich Anzeigeinhalte von zusätzlichen Funktionen angezeigt, wie beispielsweise Kurzmitteilungen, die über ein Telefon empfangen wurden.
Die DE 10 2010 001 323 A1 beschreibt ein Fahrzeugnavigationssystem mit beweglicher Anzeigevorrichtung. Dabei wird in einem Vollbildmodus eine Navigationsansicht angezeigt. Wird die Anzeigevorrichtung teilweise versenkt, wird die Navigationsanzeige in einem kleineren Anzeigefeld angezeigt.
Bei dem in der FR 2 971 878 A1 beschriebenen System zur Anzeige von Informationen in einem Kraftfahrzeug sind Displays vorgesehen, von denen eines in verschiedene Positionen ausgefahren oder versenkt werden kann. In Abhängigkeit davon, wie weit das Display ausgefahren ist, werden Elemente einer Darstellung darauf angezeigt oder auf eine davon getrennt Anzeige verlagert.

Die US 2008/211693 schlägt eine Anzeigevorrichtung vor, bei der eine Anzeige verändert wird, je nachdem, ob die Anzeigefläche vollständig oder nur teilweise sichtbar ist. Insbesondere kann die Anzeige teilweise versenkt werden, wobei in diesem Fall bestimmte Informationen in einer komprimierten Form auf der verbleibenden sichtbaren Anzeigefläche dargestellt werden.

Nachteilig an Verfahren und Vorrichtungen des Standes der Technik ist also, dass Anzeigeinhalte entweder nicht mehr, nur noch ausschnittsweise oder verkleinert auf der verkleinerten Anzeigefläche dargestellt werden können.

Es ist daher Aufgabe der vorliegenden Erfindung, ein Verfahren und eine Vorrichtung bereitzustellen, die es ermöglichen, dass in einem verkleinerten Zustand einer Anzeigefläche Anzeigeinhalte in der Form und Größe angezeigt werden können, in der sie auch auf der nicht verkleinerten Anzeigefläche angezeigt werden.

Diese Aufgabe wird durch ein Verfahren nach Anspruch 1 und eine Vorrichtung nach Anspruch 9 gelöst. Vorteilhafte Ausgestaltungen und Weiterbildungen sind Gegenstände der abhängigen Ansprüche.

Bei dem erfindungsgemäßen Verfahren werden in einem ersten Betriebsmodus einer Anzeigevorrichtung graphische Objekte vollständig auf einer Anzeigefläche angezeigt. Dabei werden die graphischen Objekte in eine erste Menge graphischer Objekte und eine zweite Menge graphischer Objekte unterteilt. Weiterhin wird in einem zweiten Betriebsmodus der Anzeigevorrichtung die Anzeigefläche verkleinert. Dabei wird die Anzeigefläche in einen sichtbaren Teil und einen nicht sichtbaren Teil unterteilt, so dass nach einem Übergang von dem ersten Betriebsmodus in den zweiten Betriebsmodus die graphischen Objekte der ersten Menge vollständig auf dem sichtbaren Teil der Anzeigefläche und die graphischen Objekte der zweiten Menge zumindest teilweise nicht auf dem sichtbaren Teil der Anzeigefläche angezeigt werden. Im zweiten Betriebsmodus wird eine Bedienaktion eines Benutzers erfasst.

Das erfindungsgemäße Verfahren ist dadurch gekennzeichnet, dass, wenn die Bedienaktion erfasst wurde, die graphischen Objekte der zweiten Menge derart auf der Anzeigefläche angeordnet werden, dass zumindest eines der graphischen Objekte der zweiten Menge vollständig auf dem sichtbaren Teil der Anzeigefläche angezeigt wird.

Die Anzahl der graphischen Objekte, welche die erste oder die zweite Menge graphischer Objekte umfasst, ist dabei von der Größe der Anzeigefläche abhängig. Insbesondere sollte die Anzahl der graphischen Objekte derart gewählt werden, dass die graphischen Objekte eine Größe aufweisen, in der sie bequem von den Fahrzeuginsassen erkannt werden können. Die Anzahl der graphischen Objekte kann dabei insbesondere in einem Bereich von einem graphischen Objekt bis zwölf graphische Objekte pro Menge liegen. Bevorzugt umfasst jede Menge sechs graphische Objekte. Besonders bevorzugt umfasst jede Menge drei graphische Objekte.

Unter sichtbar wird im Sinne der Erfindung vom Innenraum des Fahrzeugs aus sichtbar verstanden. Insbesondere sollen die graphischen Objekte von den auf den Fahrzeugsitzen sitzenden Fahrzeuginsassen sichtbar sein. Da in der Regel der Fahrer oder der Beifahrer Einrichtungen des Fahrzeugs bedienen, sollten die graphischen Objekte insbesondere vom Fahrer- und/oder Beifahrersitz aus sichtbar sein.

Wird die Anzeigevorrichtung im zweiten Betriebsmodus betrieben, kann der nicht sichtbare Teil der Anzeigefläche derart angesteuert werden, dass auf dem nicht sichtbaren Teil der Anzeigefläche keine Anzeigeinhalte mehr angezeigt werden. In diesem Bereich wird die Anzeigefläche insbesondere schwarz geschaltet oder ein Bildschirmschoner eingeschaltet. Alternativ können die Anzeigeinhalte auch im zweiten Betriebsmodus im nicht sichtbaren Teil der Anzeigefläche angezeigt werden, obwohl sie nicht sichtbar sind.

In einer Ausgestaltung wird im zweiten Betriebsmodus der nicht sichtbare Teil der Anzeigefläche von einer Innenraumabdeckung des Fahrzeugs verdeckt. Insbesondere werden die graphischen Objekte der zweiten Menge vollständig auf dem nicht sichtbaren Teil der Anzeigefläche angezeigt.

Insbesondere wird die Anzeigevorrichtung bei dem Übergang von dem ersten Betriebsmodus in den zweiten Betriebsmodus derart bewegt, dass die Innenraumabdeckung den nicht sichtbaren Teil der Anzeigefläche verdeckt. Dabei ist die zweite Menge graphischer Objekte auf dem nicht sichtbaren Teil der Anzeigefläche angeordnet. Die graphischen Objekte verschwinden dann völlig aus dem Sichtbereich eines Benutzers. Bei der Anzeigevorrichtung handelt es sich also insbesondere um eine bewegbare Anzeigevorrichtung. Durch die Bewegung der Anzeigevorrichtung kann die sichtbare Anzeigefläche in ihrer Größe verändert werden. Dies kann z.B. in unterschiedlichen Fahrmodi erwünscht sein. Ein zu großer Bildschirm kann insbesondere bei Fahrten mit hohen Geschwindigkeiten, z.B. Autobahnfahrten, störend sein, da er das Sichtfeld des Fahrers einschränken kann. Daher ist es wünschenswert, die Anzeigevorrichtung bei Fahrten mit hoher Geschwindigkeit zu verkleinern. Auch bei geringer Umgebungsbeleuchtung, also beispielsweise bei Nachtfahrten, kann das von einem großen Bildschirm emittierte Licht den Fahrer stören. Daher kann es bei Fahrten bei Dunkelheit erwünscht sein, die Licht emittierende Fläche zu verkleinern.

In einer weiteren Ausgestaltung ist die Bedienaktion eine Geste eines Benutzers. Im zweiten Betriebsmodus wird vor dem sichtbaren und/oder dem nicht sichtbaren Teil der Anzeigefläche ein Detektionsbereich gebildet, wobei die Geste in dem Detektionsbereich erfasst wird. Der Detektionsbereich wird vorteilhafterweise nicht nur vor dem sichtbaren, sondern insbesondere auch vor dem nicht sichtbaren Teil der Anzeigefläche ausgebildet. Dadurch kann der Benutzer auch eine Veränderung der Anzeigeinhalte auf dem sichtbaren Teil der Anzeigefläche hervorrufen, wenn er die Geste vor dem nicht sichtbaren Teil der Anzeigefläche, also vor der Innenraumabdeckung, ausführt. Eine Geste vor der Innenraumabdeckung auszuführen ist für den Benutzer vor allem dann intuitiv, wenn er einen Anzeigeinhalt auf den sichtbaren Teil der Anzeigefläche holen möchte, von dem er weiß, dass er sich auf dem nicht sichtbaren Teil der Anzeigefläche befindet.

Unter einer *Geste* wird im Sinne der Erfindung eine bestimmte Stellung der Hand eines Nutzers oder eine bestimmte Bewegung, die mit der Hand des Nutzers ausgeführt wird, verstanden. Die Gesten werden in einem Detektionsbereich vor der Anzeigefläche ausgeführt, ohne dass eine Berührung der Anzeigefläche erforderlich ist. Durch die Steuerung der Benutzerschnittstelle des Fahrzeugs mittels Gesten wird dem Nutzer eine besonders einfache und intuitive Eingabemöglichkeit zur Steuerung des Anzeigeinhalts auf der Anzeigefläche oder von Einrichtungen des Fahrzeugs bereitgestellt. Insbesondere ist die Geste eine Wischgeste. Die Wischgeste kann dabei insbesondere eine im Wesentlichen horizontale oder im Wesentlichen vertikale Bewegung vor der Anzeigefläche umfassen.

Insbesondere umfasst die erste Menge graphischer Objekte die gleiche Anzahl graphischer Objekte wie die zweite Menge graphischer Objekte. Weiterhin werden die Positionen der graphischen Objekte der ersten und der zweiten Menge auf der Anzeigefläche ermittelt. Wenn die Bedienaktion erfasst wurde, werden zumindest die graphischen Objekte der zweiten Menge auf den Positionen der graphischen Objekte der ersten Menge angezeigt. Weisen also die erste und die zweite Menge gleich viele graphische Objekte auf, können vorteilhafterweise alle graphischen Objekte der zweiten Menge vollständig sichtbar angezeigt werden. Dabei können die graphischen Objekte der ersten Menge dann entweder verkleinert der gar nicht mehr angezeigt werden. Beispielsweise können die graphischen Objekte der ersten Menge auf den Positionen der graphischen Objekte der zweiten Menge angezeigt werden. Durch eine einfache Geste kann der Benutzer also dafür sorgen, dass die graphischen Objekte, die normalerweise nicht mehr sichtbar angezeigt werden, in ursprünglicher Größe wieder sichtbar werden.

Alternativ können die graphischen Objekte der ersten Menge und der zweiten Menge auch als Stapelansicht angezeigt werden, wobei die graphischen Objekte der zweiten Menge dann das oberste im Stapel angezeigte Objekt bilden. Dadurch verschwinden die graphischen Objekte der ersten Menge nicht vollständig von dem sichtbaren Teil der Anzeigefläche.

In einer anderen Ausgestaltung des erfindungsgemäßen Verfahrens ist die Bedienaktion eine mittels eines Betätigungselements ausführbare Wischgeste eines Benutzers. Es wird ein erstes graphisches Objekt der ersten Menge in einer ersten Position auf der Anzeigefläche ermittelt, bei dem die Wischgeste beginnt. Weiterhin wird eine Trajektorie des Betätigungselements in dem Detektionsbereich erfasst. Ein zweites graphisches Objekt der zweiten Menge in einer zweiten Position auf der Anzeigefläche wird ermittelt, welches einem Endpunkt der Trajektorie am nächsten liegt. Dabei ist der Endpunkt der Trajektorie der Punkt, an dem das Betätigungselement den Detektionsbereich verlässt. Wenn das Betätigungselement den Detektionsbereich verlassen hat, wird an der ersten Position das zweite graphische Objekt und an der zweiten Position das erste graphische Objekt angezeigt. Diese Ausgestaltung ist insbesondere dann vorteilhaft, wenn der Benutzer lediglich ein graphisches Objekt, welches für ihn sichtbar angezeigt wird, ausgetauscht werden soll. Handelt es sich bei der Anzeige im ersten Betriebsmodus um eine Startbildanzeige, also die Anzeige, die immer dann angezeigt wird, wenn die Benutzerschnittstelle angeschaltet wird, so wird sich der Benutzer diese Startbildanzeige nach mehrmaliger Verwendung der Benutzerschnittstelle unterbewusst einprägen. Der Benutzer weiß also nach einer gewissen Verwendungsdauer, welches graphische Objekt sich an welcher Position auf der Anzeigefläche befindet. Dadurch kann er die Trajektorie des Betätigungselements einfach in die Nähe des von ihm gewünschten graphischen Objekts führen. Das Betätigungselements kann dabei insbesondere die Hand oder ein Finger des Benutzers sein.

Bevorzugt umfasst die erste Menge graphischer Objekte zumindest eine erste Reihe nebeneinander angeordneter graphischer Objekte und die zweite Menge graphischer Objekte zumindest eine zweite Reihe nebeneinander angeordneter Objekte. Insbesondere sind die graphischen Objekte der ersten Reihe und der zweiten Reihe direkt untereinander angeordnet. Die graphischen Objekte werden dann in einer Matrix angezeigt. Dadurch kann sich der Benutzer vorteilhafterweise die Positionen der verschiedenen graphischen Objekte besonders einfach einprägen.

Insbesondere umfasst zumindest die zweite Menge graphischer Objekte bedienbare Schaltelemente. Dadurch wird es vorteilhafterweise ermöglicht, dass Funktionen, die mit einem auf dem nicht sichtbaren Teil der Anzeigefläche angezeigten Schaltelement bedient werden, auch im zweiten Betriebsmodus der Anzeigevorrichtung bedienbar bleiben.

Unter einem *Schaltelement* wird im Sinne der Erfindung ein Steuerelement einer graphischen Benutzerschnittstelle verstanden. Ein Schaltelement unterscheidet sich von Elementen und Flächen zur reinen Informationsanzeige, so genannten Anzeigeelementen bzw. Anzeigenflächen, darin, dass sie auswählbar sind. Bei einer Auswahl eines Schaltelements wird eine ihm zugeordnete Funktion ausgeführt. Die Funktion kann nur zu einer Veränderung der Informationsanzeige führen. Ferner können über die Schaltelemente Einrichtungen gesteuert werden, deren Bedienung von der Informationsanzeige unterstützt werden. Die Schaltelemente können somit herkömmliche mechanische Schalter ersetzen. Die Schaltelemente können beliebig für eine frei programmierbare Anzeigefläche erzeugt und von dieser angezeigt werden. Des Weiteren kann vorgesehen sein, dass ein Schaltelement markiert werden kann. In diesem Fall wird die zugeordnete Funktion noch nicht ausgeführt. Das markierte Schaltelement wird jedoch gegenüber anderen Schaltelementen hervorgehoben dargestellt. Erst bei einer Auswahl des Schaltelements wird die ihm zugeordnete Funktion ausgeführt.

Ferner betrifft die Erfindung eine Vorrichtung zum Bereitstellen einer graphischen Benutzerschnittstelle in einem Fahrzeug. Die Vorrichtung umfasst eine Anzeigevorrichtung, wobei die Anzeigevorrichtung in einem ersten Betriebsmodus betreibbar ist, in dem graphische Objekte vollständig auf einer Anzeigefläche anzeigbar sind, wobei die graphischen Objekte in eine erste Menge graphischer Objekte und eine zweite Menge graphischer Objekte unterteilt sind. Weiterhin ist die Anzeigevorrichtung in einem zweiten Betriebsmodus betreibbar, in dem die Anzeigefläche verkleinerbar ist, wobei die Anzeigefläche in einen sichtbaren und einen nicht sichtbaren Teil unterteilt ist, so dass nach einem Übergang von dem ersten Betriebsmodus in den zweiten Betriebsmodus die graphischen Objekte der ersten Menge vollständig auf dem sichtbaren Teil der Anzeigefläche und die graphischen Objekte der zweiten Menge zumindest teilweise nicht auf dem sichtbaren Teil der Anzeigefläche anzeigbar sind. Zudem umfasst die Vorrichtung eine Erfassungseinheit, mittels welcher eine Bedienaktion eines Benutzers im zweiten Betriebsmodus der Anzeigevorrichtung erfassbar ist.

Die erfindungsgemäße Vorrichtung ist gekennzeichnet durch eine Steuereinheit, mittels welcher die Anzeigevorrichtung derart ansteuerbar ist, dass die graphischen Objekte der zweiten Menge im zweiten Betriebsmodus, wenn die Bedienaktion erfasst wurde, derart auf der Anzeigefläche anordenbar sind, dass zumindest eines der graphischen Objekte der zweiten Menge vollständig auf dem sichtbaren Teil der Anzeigefläche anzeigbar ist. Die erfindungsgemäße Vorrichtung ist insbesondere zum
Ausführen des erfindungsgemäßen Verfahrens geeignet und weist daher alle Vorteile des Verfahrens auf.

In einer Ausgestaltung der erfindungsgemäßen Vorrichtung umfasst die Vorrichtung eine Innenraumabdeckung, in welche die Anzeigevorrichtung versenkbar ist. Der erste Betriebsmodus ist dabei insbesondere ein Vollbildmodus, in dem die Anzeigevorrichtung nicht versenkt ist, und der zweite Betriebsmodus ist ein Teilbildmodus, in dem der sichtbare Teil der Anzeigefläche nicht versenkt ist und der nicht sichtbare Teil der Anzeigefläche versenkt ist.

Insbesondere verdeckt im zweiten Betriebsmodus die Innenraumabdeckung die Sicht auf den nicht sichtbaren Teil der Anzeigefläche. Dabei sind die graphischen Objekte der zweiten Menge insbesondere zumindest teilweise auf dem nicht sichtbaren Teil der Anzeigefläche angeordnet sind.

Bevorzugt ist die Innenraumabdeckung Teil des Armaturenbretts des Fahrzeugs. Die Anzeigevorrichtung ist also bevorzugt im Armaturenbrett angebracht und kann in das Armaturenbrett versenkt werden. Insbesondere, wenn Anzeigevorrichtungen im Armaturenbrett das Sichtfeld des Fahrers stören können, ist es vorteilhaft, wenn diese in bestimmten Situationen versenkt werden können. Mit der erfindungsgemäßen Vorrichtung sind jedoch weiterhin alle Funktionen und Informationen in ursprünglicher Größe anzeigbar und bedienbar.

In einer weiteren Ausgestaltung der erfindungsgemäßen Vorrichtung ist in dem zweiten Betriebsmodus in einem Raum vor der Anzeigevorrichtung ein Detektionsbereich ausgebildet, in dem die Bedienaktion erfassbar ist, wobei der Detektionsbereich vor dem sichtbaren Teil der Anzeigefläche und/oder der Innenraumabdeckung ausgebildet ist. Vorteilhafterweise kann eine Bedienaktion dann auch vor dem nicht sichtbaren Teil der Anzeigefläche erfasst werden. Dies ist dann besonders intuitiv, wenn der Benutzer weiß, dass sich das von ihm gewünschte graphische Objekt auf dem nicht sichtbaren versenkten Teil der Anzeigefläche befindet.

Ferner betrifft die Erfindung ein Fahrzeug, das eine erfindungsgemäße Vorrichtung umfasst.

Im Folgenden wird die Erfindung anhand von Ausführungsbeispielen mit Bezug zu den Zeichnungen erläutert.
- Figur 1: zeigt ein Ausführungsbeispiel der erfindungsgemäßen Vorrichtung,
- Figur 2: zeigt ein Beispiel einer Anordnung der erfindungsgemäßen Vorrichtung in einem Fahrzeug,
- Figur 3: zeigt eine Schnittansicht der Anzeigevorrichtung des Ausführungsbeispiels der erfindungsgemäßen Vorrichtung mit ausgebildetem Detektionsbereich,
- Figuren 4a bis 4c: zeigen die Ansichten auf der Anzeigefläche der Anzeigevorrichtung im Laufe eines ersten Ausführungsbeispiels des erfindungsgemäßen Verfahrens und
- Figuren 5a bis 5c: zeigen die Ansichten auf der Anzeigefläche der Anzeigevorrichtung im Laufe eines zweiten Ausführungsbeispiels des erfindungsgemäßen Verfahrens.

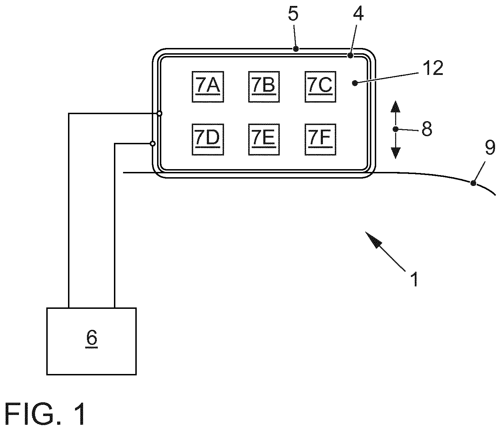

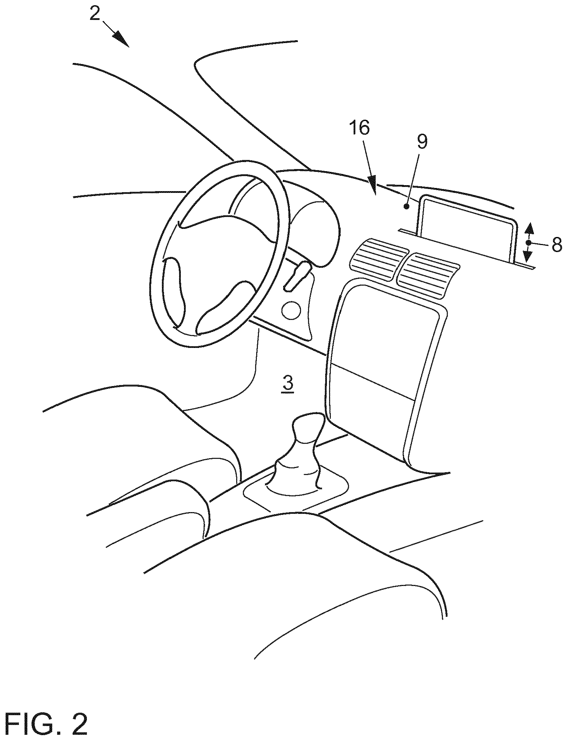

Mit Bezug zu den Figuren 1, 2 und 3 wird ein Ausführungsbeispiel einer erfindungsgemäßen Vorrichtung 1 sowie eine Anordnung der Vorrichtung 1 in einem Innenraum 3 eines Fahrzeugs 2 erläutert.

Die Vorrichtung 1 umfasst eine Anzeigevorrichtung 4, auf der mehrere graphische Objekte 7A bis 7F anzeigbar sind. Die graphische Objekte 7A bis 7F sind als Schaltelemente ausgebildet, die über Berührungen der Anzeigefläche 12 mit einem Bedienelement 10, beispielsweise einem Finger, bedient werden können. Dazu ist die Anzeigefläche 12 mit einer berührungsempfindlichen Oberfläche ausgestattet.

Die Anzeigevorrichtung 4 ist weiterhin derart im Innenraum 3 des Fahrzeugs 2 angeordnet, dass sie in eine Innenraumabdeckung 9, die im Ausführungsbeispiel zum Armaturenbrett 16 des Fahrzeugs 2 gehört, versenkt werden kann. Dies ist durch den Pfeil 8 angedeutet. Die Anzeigevorrichtung 4 kann entweder manuell, z.B. auf Knopfdruck des Fahrers, versenkt werden oder automatisch in Abhängigkeit eines Fahrmodus versenkt werden. Eine zu große Anzeigefläche 12 im Sichtfeld des Fahrers kann beispielsweise bei Autobahnfahrten störend sein. Daher kann die Anzeigevorrichtung 4 automatisch versenkt werden, wenn das Fahrzeug eine bestimmte Geschwindigkeit erreicht hat. Der Fahrer kann sich aber auch insbesondere bei Nachtfahrten durch zu viel Licht, welches von der Anzeigefläche 12 der Anzeigevorrichtung 4 emittiert wird, gestört fühlen, und die Anzeigefläche 12 per Knopfdruck verkleinern.

Die Anzeigevorrichtung 4 ist also in zwei Betriebsmodi betreibbar. Ein erster Betriebsmodus stellt dabei einen Vollbildmodus dar. Dies bedeutet, dass die Anzeigefläche 12 der Anzeigevorrichtung 4 vollständig, also in ihrer vollen Größe, vom Innenraum 3 des Fahrzeugs 2 aus sichtbar ist. Insbesondere kann die Anzeigefläche 12 im Vollbildmodus vom Fahrer auf dem Fahrersitz des Fahrzeugs 2 in seiner ganzen Größe eingesehen werden.

Ein zweiter Betriebsmodus umfasst einen Teilbildmodus. Dies bedeutet, dass die Anzeigevorrichtung 4 bis zu einer bestimmten Tiefe in die Innenraumabdeckung 9 des Armaturenbretts 16 eingefahren bzw. versenkt wird. Dadurch verringert sich die für die Fahrzeuginsassen sichtbare Anzeigefläche 12. Die auf dem nicht sichtbaren Teil 12.2 der Anzeigefläche 12 befindlichen Anzeigeinhalte sind dann nicht mehr bzw. nicht mehr vollständig einsehbar.

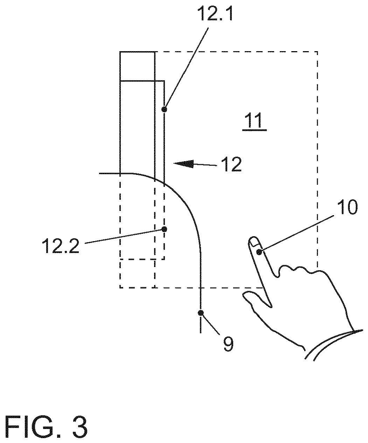

Die Anzeigevorrichtung 4 ist des Weiteren mit einer Erfassungseinheit 5 gekoppelt. Mittels der Erfassungseinheit 5 ist insbesondere im zweiten Betriebsmodus ein Betätigungselement 10, z.B. eine Hand oder eine Fingerspitze des Benutzers, in einem Detektionsbereich 11 erfassbar. Der Detektionsbereich 11 ist in Figur 3 im Detail dargestellt. Insbesondere ist der Detektionsbereich 11 auch vor dem im zweiten Betriebsmodus nicht sichtbaren Teil 12.2 der Anzeigefläche 12 ausgebildet. Dies bedeutet, dass der Detektionsbereich 11 teilweise vor der Innenraumabdeckung 9 ausgebildet ist.

In dem hier beschriebenen Ausführungsbeispiel bildet der Detektionsbereich 11 zumindest ein Volumen vor dem nicht sichtbaren Teil 12.1 der Anzeigefläche 12 und dem Teil der Innenraumabdeckung 9, hinter dem sich der nicht sichtbare Teil 12.2 der Anzeigefläche 12 befindet. Es ist insbesondere ein Quader gebildet, der mit seinen Seitenflächen in der Erstreckung, die parallel zu der Anzeigefläche 12 verläuft, beide Teil 12.1 und 12.2 der Anzeigefläche 12 vollständig umschließt. In einer Richtung senkrecht zur Anzeigefläche 12 reicht der Quader von der Anzeigefläche 12 oder unmittelbar vor Anzeigefläche 12 bis zu einem Abstand von z. B. etwa 60 cm. Dadurch ist der Detektionsbereich 11 insbesondere auch vor der Innenraumabdeckung 9 ausgebildet. Der Abstand der äußeren Grenze des Detektionsbereichs 11 vor der Anzeigefläche 12 wird dabei so gewählt, dass eine Bedienaktion im Detektionsbereich 11 so rechtzeitig detektiert werden kann, dass die Anzeige auf der Anzeigefläche 12 früh genug verändert werden kann. Ferner sollte der Abstand des Detektionsbereichs 11 von der Anzeigefläche 12 so gewählt werden, dass das Betätigungselement 10 so selten wie möglich in den Detektionsbereich 11 bewegt wird, wenn keine Bedienung über die Anzeigevorrichtung 4 beabsichtigt ist.

Die Erfassungseinheit 5 überträgt die aktuelle Position eines Betätigungselements 10 im Detektionsbereich 11 fortwährend an eine mit der Anzeigevorrichtung 4 gekoppelte Steuereinheit 6. In Abhängigkeit von diesem Signal kann die Steuereinheit 6 die Anzeige auf der Anzeigefläche 12 verändern.

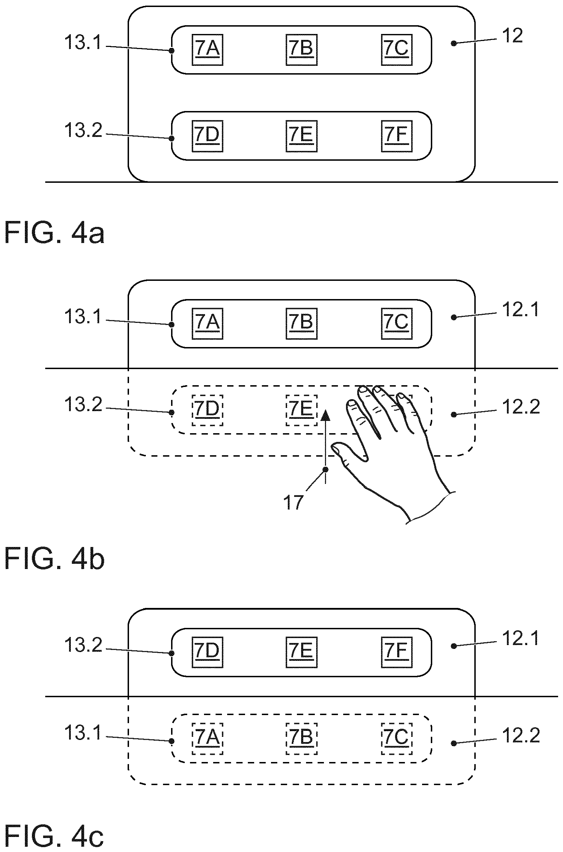

Mit Bezug zu den Figuren 4a bis 4c wird ein erstes Ausführungsbeispiel des erfindungsgemäßen Verfahrens erläutert.

Ausgangssituation ist dabei der in Figur 4a gezeigte Vollbildmodus. Dabei werden auf der Anzeigefläche 12 die sechs graphischen Objekte 7A bis 7F vollständig sichtbar angezeigt. Die graphischen Objekte 7A bis 7F sind dabei in zwei Mengen 13.1 und 13.2 aufgeteilt. Die erste Menge 13.1 umfasst dabei die graphischen Objekte 7A bis 7C und die zweite Menge 13.2 die graphischen Objekte 7D bis 7F. Die Aufteilung der graphischen Objekte 7A bis 7F in die Mengen 13.1 und 13.2 ist lediglich intern in der Steuereinheit 6 abgelegt und für den Benutzer auf der Anzeigefläche 12 nicht sichtbar. Zudem sind die graphischen Objekte 7A bis 7C der ersten Menge 13.1 nebeneinander in einer oberen Reihe angeordnet. Die graphischen Objekte 7D bis 7F der zweiten Menge 13.2 sind in einer unteren Reihe nebeneinander angeordnet. Die graphischen Objekte 7A bis 7F der beiden Mengen 13.1 und 13.2 sind weiterhin derart untereinander angeordnet, dass die graphischen Objekte 7A und 7D, 7B und 7E sowie die graphischen Objekte 7C und 7F direkt untereinander angeordnet sind. Dies hat den Vorteil, dass die Aufteilung der Objekte 7A bis 7F eindeutig und klar entlang einer Linie erfolgen kann. Zudem kann sich der Benutzer so die Positionen der unterschiedlichen graphischen Objekte 7A bis 7F gut einprägen.

Auf Knopfdruck des Benutzers wird die Anzeigevorrichtung 4 in Bewegung versetzt. Durch die Bewegung geht die Anzeigevorrichtung 4 von dem ersten Betriebsmodus in den zweiten Betriebsmodus über. Die Anzeigevorrichtung 4 wird so lange in die Innenraumabdeckung 9 des Armaturenbrett 16 versenkt, bis die Anzeigefläche 12 zur Hälfte von der Innenraumabdeckung 9 verdeckt wird. Dies bedeutet also, dass nur noch der Teil 12.1 der Anzeigefläche 12 vom Innenraum 3 des Fahrzeugs 2 aus sichtbar ist. Der andere Teil 12.2 der Anzeigefläche 12 hingegen ist nicht mehr sichtbar, da er von der Innenraumabdeckung 9 verdeckt wird.

Die Anordnung der graphischen Objekte 7A bis 7F auf der Anzeigefläche 12 wird dabei nicht verändert. Daher ist die untere Reihe der graphischen Objekte 7D bis 7F, die sich auf dem nun nicht mehr sichtbaren Teil 12.2 der Anzeigefläche 12 befindet, auch nicht mehr sichtbar. Es können also auch Funktionen, die mit den nicht mehr sichtbaren graphischen Objekten 7D bis 7F assoziiert sind, nicht mehr bedient werden.

Möchte der Benutzer nun eine der nur mit den Schaltflächen 7D bis 7F bedienbare Funktion bedienen, bringt er das Betätigungselement 10, beispielsweise seine Hand oder seinen Finger, in den Detektionsbereich 11 und führt eine Bewegung nach oben, also eine in Richtung der Fahrzeugdecke gerichtete Wischgeste 17, aus. Da der Benutzer mit der Wischgeste beabsichtigt, die untere, nicht mehr sichtbare Reihe nach oben auf den sichtbaren Teil 12.1 der Anzeigefläche 12 zu holen, ist eine solche Wischgeste 17 besonders intuitiv.

Die Wischgeste 17 wird von der Erfassungseinheit 5 in dem Detektionsbereich 11 erfasst. Zudem wird erfasst, dass es sich bei der Wischgeste 17 um die Bedienaktion handelt, mit der die erste Menge 13.1 bzw. untere Reihe mit der zweiten Menge 13.2 bzw. der oberen Reihe ausgetauscht wird.

Die Erfassungseinheit 5 übermittelt an die Steuereinheit 6, dass die Wischgeste 17 erfolgt ist.

Daraufhin ermittelt die Steuereinheit 6 zunächst die Positionen der graphischen Objekte 7A bis 7F. Die Steuereinheit 6 steuert die Anzeigefläche 12 der Anzeigevorrichtung 4 so an, dass die beiden Reihen bzw. die beiden Mengen 13.1 und 13.2 vertauscht angezeigt werden. Dies bedeutet, dass das graphische Objekt 7D an der Ausgangsposition des graphischen Objekts 7A, das graphische Objekt 7E an der Ausgangsposition des graphischen Objekts 7B und das graphische Objekt 7F an der Ausgangsposition des graphischen Objekts 7C angezeigt wird. Die zuvor nicht mehr sichtbaren graphischen Objekte 7D bis 7F können nun wieder bedient werden.

Möchte der Benutzer wieder eines der Schaltelemente 7A bis 7C bedienen, führt er wiederum eine Wischgeste 17 nach oben in dem Detektionsbereich 11 aus.

Eine Wischgeste 17 nach oben ist dabei besonders intuitiv. Alternativ kann auch eine Wischgeste 17 in jede beliebige andere Raumrichtung im Detektionsbereich 11 ausgeführt werden, beispielsweise eine vertikale Bewegung. Alternativ kann auch eine Geste die Bedienaktion sein, die keine translatorische Bewegung des Betätigungselements 10 umfasst, also beispielsweise ein Öffnen einer geballten Faust.

Vorteilhaft an dem erfindungsgemäßen Verfahren ist insbesondere, dass die Größe der graphischen Objekte 7A bis 7F nicht verändert werden muss, um sie vollständig sichtbar auf dem sichtbaren Teil 12.1 der Anzeigefläche 12 anzuzeigen.

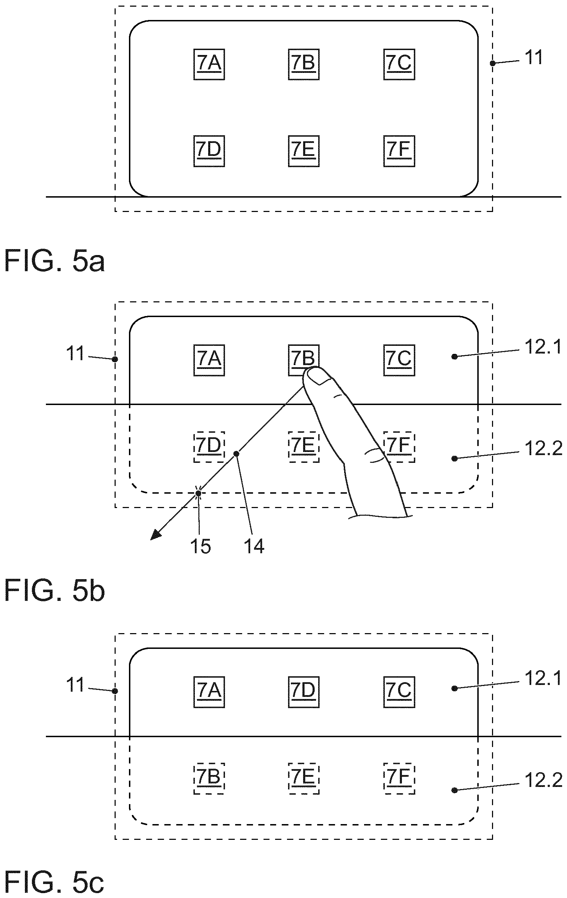

Mit Bezug zu den Figuren 5a bis 5c wird ein zweites Ausführungsbeispiel des erfindungsgemäßen Verfahrens erläutert.

Ausgangssituation ist wieder der bereits mit Figur 4a erläuterte Vollbildmodus, der nochmals in Figur 5a dargestellt ist. Zudem ist der um die Anzeigefläche 12 herum ausgebildete Detektionsbereich 11 aus der Frontalansicht angedeutet.

Das Bewegen der Anzeigevorrichtung 4 in den zweiten Betriebsmodus erfolgt dabei auf die gleiche Weise wie im ersten Ausführungsbeispiel des Verfahrens beschrieben.

Nun beabsichtigt der Benutzer, lediglich ein graphisches Objekt 7D auf den sichtbaren Teil 12.1 der Anzeigefläche 12 zu holen. Dazu muss der Benutzer wissen, wo sich das graphische Objekt 7D ungefähr auf dem nicht sichtbaren Teil 12.2 der Anzeigefläche 12 befindet. Dies ist insbesondere dann der Fall, wenn der Benutzer die graphische Benutzerschnittstelle schon häufig verwendet hat. Da eine in einem Fahrzeug 2 angeordnete graphische Benutzerschnittstelle immer dann verwendet wird, wenn der Benutzer mit dem Fahrzeug 2 fährt, werden die Positionen der graphischen Objekte 7A bis 7F nach mehrfacher Verwendung unterbewusst vom Benutzer eingeprägt. Kann der Benutzer zudem den Startbildschirm selbst konfigurieren, beispielsweise über "Drag and Drop"-Aktionen, wird es besonders einfach für den Benutzer, sich die Positionen der graphischen Objekte 7A bis 7F einzuprägen, da er sie selbst positioniert hat.

Der Benutzer bringt das Betätigungselement 10 in den Detektionsbereich 11. Weiterhin sucht er sich eines der drei graphischen Objekte 7A bis 7C aus, welches er gegen das graphische Objekt 7D austauschen möchte, beispielsweise das graphische Objekt 7B. Dazu deutet er auf das graphische Objekt 7B. Von der Erfassungseinheit 5 wird zunächst die Position des Betätigungselements 10 im Detektionsbereich 11 ermittelt. Die Position des Betätigungselements 10 wird an die Steuereinheit 6 übermittelt, die wiederum die Position des wahrscheinlich ausgewählten graphischen Objekts 7B auf der Anzeigefläche 12 ermittelt. Je näher sich das Betätigungselement 10 dabei an der Anzeigefläche 12 befindet, desto genauer ist die Bestimmung des ausgewählten graphischen Objekts 7B. Um von einer zufälligen Bewegung des Betätigungselements im Detektionsbereich 11 zu unterscheiden, wird zudem erfasst, wie lange der Benutzer mit seinem Finger auf das Objekt 7B deutet. Übersteigt die Dauer ein vorbestimmtes Zeitintervall, das beispielsweise in einem Bereich von 0,5 bis 2,5 Sekunden liegt, wird der Fingerzeig auf das graphische Objekt 7B als Beginn der Bedienaktion gewertet. Alternativ kann der Benutzer das graphische Objekt 7B durch Berühren auswählen.

Daraufhin bewegt der Benutzer das Betätigungselement 10 schräg nach links unten in Richtung des graphischen Objekts 7D, wobei dem Benutzer die ungefähre Lage des graphischen Objekts 7D auf dem nicht sichtbaren Teil 12.2 der Anzeigefläche 12 bekannt ist. Dabei ist es nicht notwendig, dass der Benutzer mit dem Betätigungselement 10 genau den Ort überfährt, an dem das graphische Objekt 7D positioniert ist, dieses kann er schließlich nicht sehen. Vielmehr wird von der Erfassungseinheit 5 die Trajektorie 14 erfasst, mit der das Betätigungselement 10 durch den Detektionsbereich 11 geführt wird. Als Endpunkt 15 der Trajektorie 14 wird der Punkt bestimmt, an dem das Betätigungselement 10 den Detektionsbereich 11 verlässt. Das graphische Objekt 7D, welches am nächsten zu dem Endpunkt 15 auf dem nicht sichtbaren Teil 12.2 der Anzeigefläche 12 angezeigt wird, wird dann als das graphische Objekt 7D bis 7F ermittelt, welches an der Position des graphischen Objekts 7B angezeigt werden soll. Dadurch wird vermieden, dass der Benutzer eine genau Position eines graphischen Objekts 7D bis 7F mit dem Betätigungselement 10 treffen muss. Zudem kann der Benutzer sich während der Bedienaktion auch noch für ein anderes graphisches Objekt 7E oder 7F entscheiden. Solange er den Detektionsbereich 11 mit dem Betätigungselement 10 nicht verlassen hat, werden die graphischen Objekte 7B und 7D nicht ausgetauscht.

Liegt der Endpunkt 15 zufälligerweise in gleichem Abstand zu zwei nebeneinander angeordneten graphischen Objekten 7D bis 7F, beispielsweise zwischen den graphischen Objekten 7D und 7E, so wird das graphische Objekt 7D oder 7E als auszutauschendes graphisches Objekt 7D bis 7F ermittelt, welches der Benutzer in der Vergangenheit häufiger verwendet hat.

Anstatt manuell kann in beiden Verfahren die Bewegung der Anzeigevorrichtung 4 auch automatisch initiiert werden. Beispielsweise kann dies geschehen, wenn eine bestimmte Geschwindigkeit überschritten wird, oder wenn eine bestimmter Helligkeitswert der Umgebung unterschritten wird.

Auch können beide Verfahren miteinander kombiniert werden. So können alle auf dem nicht sichtbaren Teil 12.2 der Anzeigefläche 12 angezeigten graphischen Objekte 7D bis 7F durch eine horizontale Wischgeste 17 mit den auf dem sichtbaren Teil 12.1 der Anzeigefläche 12 angezeigten graphischen Objekten 7A bis 7C ausgetauscht werden. Wird hingegen der Fingerzeig auf das graphische Objekt 7B erfasst, wird lediglich das graphische Objekt 7B durch das gewünschte graphische Objekt 7D ausgetauscht.

### Bezugszeichenliste

- 1: Vorrichtung
- 2: Fahrzeug
- 3: Innenraum des Fahrzeugs
- 4: Anzeigevorrichtung
- 5: Erfassungseinheit
- 6: Steuereinheit
- 7A - 7F: graphische Objekte
- 8: Bewegungsrichtung der Anzeigevorrichtung
- 9: Innenraumabdeckung
- 10: Betätigungselement
- 11: Detektionsbereich
- 12: Anzeigefläche
- 12.1: sichtbarer Teil der Anzeigefläche
- 12.2: nichtsichtbarer Teil der Anzeigefläche
- 13.1: erste Menge graphischer Objekte
- 13.2: zweite Menge graphischer Objekte
- 14: Trajektorie des Betätigungselements
- 15: Endpunkt der Trajektorie
- 16: Armaturenbrett
- 17: Geste des Benutzers

## Patentansprüche

1. Verfahren zum Bereitstellen einer graphischen Benutzerschnittstelle für ein Fahrzeug (2), bei dem
in einem ersten Betriebsmodus einer Anzeigevorrichtung (4) graphische Objekte (7A - 7F) vollständig sichtbar auf einer Anzeigefläche (12) angezeigt werden, wobei die graphischen Objekte (7A - 7F) in eine erste Menge (13.1) graphischer Objekte (7A - 7C) und eine zweite Menge (13.2) graphischer Objekte (7D - 7F) unterteilt werden,
in einem zweiten Betriebsmodus der Anzeigevorrichtung (4) die Anzeigefläche (12) verkleinert wird, wobei die Anzeigefläche (12) in einen sichtbaren Teil (12.1) und einen nicht sichtbaren Teil (12.2) unterteilt wird, so dass nach einem Übergang von dem ersten Betriebsmodus in den zweiten Betriebsmodus die graphischen Objekte (7A - 7C) der ersten Menge (13.1) vollständig auf dem sichtbaren Teil (12.1) der Anzeigefläche (12) und die graphischen Objekte (7D - 7F) der zweiten Menge (13.2) zumindest teilweise nicht auf dem sichtbaren Teil (12.1) der Anzeigefläche (12) angezeigt werden, und
im zweiten Betriebsmodus eine Bedienaktion (17) eines Benutzers erfasst wird, **dadurch gekennzeichnet, dass,**
wenn die Bedienaktion erfasst wurde, die graphischen Objekte (7D - 7F) der zweiten Menge (13.2) derart auf der Anzeigefläche (12) angeordnet werden, dass zumindest eines der graphischen Objekte (7D - 7F) der zweiten Menge (13.2) vollständig auf dem sichtbaren Teil (12.1) der Anzeigefläche (12) angezeigt wird.

2. Verfahren nach Anspruch 1,
**dadurch gekennzeichnet, dass**
im zweiten Betriebsmodus der nicht sichtbare Teil (12.2) der Anzeigefläche (12) von einer Innenraumabdeckung (9) des Fahrzeugs (2) verdeckt wird.

3. Verfahren nach Anspruch 2,
**dadurch gekennzeichnet, dass**
die Anzeigevorrichtung (4) bei dem Übergang von dem ersten Betriebsmodus in den zweiten Betriebsmodus derart bewegt wird, dass die Innenraumabdeckung (9) den nicht sichtbaren Teil (12.2) der Anzeigefläche (12) verdeckt, wobei die zweite Menge (13.2) graphischer Objekte (7D - 7F) auf dem nicht sichtbaren Teil (12.2) der Anzeigefläche (12) angeordnet ist.

4. Verfahren nach einem der Ansprüche 1, 2 oder 3,
**dadurch gekennzeichnet, dass**
die Bedienaktion eine Geste (17) eines Benutzers ist,
im zweiten Betriebsmodus vor dem sichtbaren (12.1) und/oder dem nicht sichtbaren Teil (12.2) der Anzeigefläche (12) ein Detektionsbereich (11) gebildet wird, wobei die Geste (17) in dem Detektionsbereich (11) erfasst wird.

5. Verfahren nach einem der vorhergehenden Ansprüche,
**dadurch gekennzeichnet, dass**
die erste Menge (13.1) graphischer Objekte (7A-7F) die gleiche Anzahl graphischer Objekte (7A - 7F) umfasst wie die zweite Menge (13.2) graphischer Objekte (7A - 7F),
die Positionen der graphischen Objekte (7A - 7F) der ersten (13.1) und der zweiten Menge (13.2) auf der Anzeigefläche (12) ermittelt werden, und,
wenn die Bedienaktion erfasst wurde, zumindest die graphischen Objekte (7D - 7F) der zweiten Menge (13.2) auf den Positionen der graphischen Objekte (7A - 7C) der ersten Menge (13.1) angezeigt werden.

6. Verfahren nach Anspruch 4,
**dadurch gekennzeichnet, dass**
die Bedienaktion eine mittels eines Betätigungselements (10) ausführbare Wischgeste eines Benutzers ist,
ein erstes graphisches Objekt (7B) der ersten Menge (13.1) in einer ersten Position auf der Anzeigefläche (12) ermittelt wird, bei dem die Wischgeste beginnt,
eine Trajektorie (14) des Betätigungselements (10) in dem Detektionsbereich (11) erfasst wird,
ein zweites graphisches Objekt (7D) der zweiten Menge (13.2) in einer zweiten Position auf der Anzeigefläche (12) ermittelt wird, welches einem Endpunkt (15) der Trajektorie (14) am nächsten liegt, wobei der Endpunkt (15) der Trajektorie (14) der Punkt ist, an dem das Betätigungselement (10) den Detektionsbereich (11) verlässt, und,
wenn das Betätigungselement (10) den Detektionsbereich (11) verlassen hat, an der ersten Position das zweite graphische Objekt (7D) und an der zweiten Position das erste graphische Objekt (7B) angezeigt wird.

7. Verfahren nach einem der vorhergehenden Ansprüche,
**dadurch gekennzeichnet, dass**
die erste Menge (13.1) zumindest eine erste Reihe (13.1) nebeneinander angeordneter graphischer Objekte (7A - 7F) umfasst und die zweite Menge (13.2) zumindest eine zweite Reihe (13.2) nebeneinander angeordneter graphischer Objekte (7A - 7F) umfasst.

8. Verfahren nach Anspruch einem der vorhergehenden Ansprüche,
**dadurch gekennzeichnet, dass**
zumindest die zweite Menge (13.2) graphischer Objekte (7A - 7F) bedienbare Schaltelemente umfasst.

9. Vorrichtung (1) zum Bereitstellen einer graphischen Benutzerschnittstelle für ein Fahrzeug (2), mit
einer Anzeigevorrichtung (4),
wobei die Anzeigevorrichtung (4) in einem ersten Betriebsmodus betreibbar ist, in dem graphische Objekte (7A - 7C) vollständig auf einer Anzeigefläche (12) anzeigbar sind, die graphischen Objekte (7A - 7F) in eine erste Menge (13.1) graphischer Objekte (7A-7C) und eine zweite Menge (13.2) graphischer Objekte (7D - 7F) unterteilt sind, und
wobei die Anzeigevorrichtung (4) in einem zweiten Betriebsmodus betreibbar ist, in dem die Anzeigefläche (12) verkleinerbar ist, wobei die Anzeigefläche (12) in einen sichtbaren (12.1) und einen nicht sichtbaren Teil (12.2) unterteilt ist, so dass nach einem Übergang von dem ersten in den zweiten Betriebsmodus die graphischen Objekte (7A - 7C) der ersten Menge (13.1) vollständig auf dem sichtbaren Teil (12.1) der Anzeigefläche (12) und die graphischen Objekte (7D - 7F) der zweiten Menge (13.2) zumindest teilweise nicht auf dem sichtbaren Teil (12.2) der Anzeigefläche (12) anzeigbar sind, und
einer Erfassungseinheit (5), mittels welcher eine Bedienaktion eines Benutzers im zweiten Betriebsmodus der Anzeigevorrichtung (4) erfassbar ist,
**gekennzeichnet durch**
eine Steuereinheit (6), mittels welcher die Anzeigevorrichtung (4) derart ansteuerbar ist, dass die graphischen Objekte (7D - 7F) der zweiten Menge (13.2) im zweiten Betriebsmodus, wenn die Bedienaktion erfasst wurde, derart auf der Anzeigefläche (12) anordenbar sind, dass zumindest eines der graphischen Objekte (7D - 7F) der zweiten Menge (13.2) vollständig auf dem sichtbaren Teil (12.1) der Anzeigefläche (12) anzeigbar ist.

10. Vorrichtung (1) nach Anspruch 9,
**dadurch gekennzeichnet, dass**
die Vorrichtung (1) eine Innenraumabdeckung (9) umfasst, in welche die Anzeigevorrichtung (4) versenkbar ist, wobei der erste Betriebsmodus ein Vollbildmodus ist, in dem die Anzeigevorrichtung (4) nicht versenkt ist, und der zweite Betriebsmodus ein Teilbildmodus ist, in dem der sichtbare Teil (12.1) der Anzeigefläche (12) nicht versenkt ist und der nicht sichtbare Teil (12.2) der Anzeigefläche (12) versenkt ist.

11. Vorrichtung (1) nach Anspruch 10,
**dadurch gekennzeichnet, dass**
im zweiten Betriebsmodus die Innenraumabdeckung (9) die Sicht auf den nicht sichtbaren Teil (12.2) der Anzeigefläche (12) verdeckt.

12. Vorrichtung (1) nach Anspruch 10 oder 11,
**dadurch gekennzeichnet, dass**
die Innenraumabdeckung (9) Teil des Armaturenbretts (16) des Fahrzeugs (2) ist.

13. Vorrichtung (1) nach einem der Ansprüche 10 bis 12,
**dadurch gekennzeichnet, dass**
in dem zweiten Betriebsmodus in einem Raum vor der Anzeigefläche (12) der Anzeigevorrichtung (4) ein Detektionsbereich (11) ausgebildet ist, in dem die Bedienaktion erfassbar ist, wobei der Detektionsbereich (11) vor dem sichtbaren Teil (12.1) der Anzeigefläche (12) und/oder der Innenraumabdeckung (9) ausgebildet ist.

14. Fahrzeug (2) mit einer Vorrichtung (1) nach einem der Ansprüche 9 bis 13.

## Claims

1. Method for providing a graphical user interface for a vehicle (2),
in which
in a first operating mode of a display device (4), graphic objects (7A-7F) are displayed fully visibly on a display surface (12), wherein the graphic objects (7A-7F) are subdivided into a first set (13.1) of graphic objects (7A-7C) and a second set (13.2) of graphic objects (7D-7F),
in a second operating mode of the display device (4), the display surface (12) is reduced in size, wherein the display surface (12) is subdivided into a visible part (12.1) and a non-visible part (12.2) so that, after a transition from the first operating mode to the second operating mode, the graphic objects (7A-7C) of the first set (13.1) are fully displayed on the visible part (12.1) of the display surface (12) and the graphic objects (7D-7F) of the second set (13.2) are at least partially not displayed on the visible part (12.1) of the display surface (12), and
in the second operating mode, an operating action (17) of a user is detected, **characterized in that**
if the operating action was detected, the graphic objects (7D-7F) of the second set (13.2) are arranged on the display surface (12) in such a way that at least one of the graphic objects (7D-7F) of the second set (13.2) is fully displayed on the visible part (12.1) of the display surface (12).

2. Method according to Claim 1,
**characterized in that**
in the second operating mode, the non-visible part (12.2) of the display surface (12) is concealed by an interior cover (9) of the vehicle (2).

3. Method according to Claim 2,
**characterized in that**
during the transition from the first operating mode to the second operating mode, the display device (4) is moved such that the interior cover (9) conceals the non-visible part (12.2) of the display surface (12), wherein the second set (13.2) of graphic objects (7D-7F) is arranged on the non-visible part (12.2) of the display surface (12).

4. Method according to any one of Claims 1, 2 or 3,
**characterized in that**
the operating action is a gesture (17) of a user,
in the second operating mode, a detection area (11) is formed in front of the visible (12.1) and/or the non-visible part (12.2) of the display surface (12), wherein the gesture (17) is detected in the detection area (11).

5. Method according to any one of the preceding claims,
**characterized in that**
the first set (13.1) of graphic objects (7A-7F) comprises the same number of graphic objects (7A-7F) as the second set (13.2) of graphic objects (7A-7F),
the positions of the graphic objects (7A-7F) of the first (13.1) and of the second set (13.2) on the display surface (12) are determined, and
if the operating action was detected, at least the graphic objects (7D-7F) of the second set (13.2) are displayed at the positions of the graphic objects (7A-7C) of the first set (13.1).

6. Method according to Claim 4,
**characterized in that**
the operating action is a swiping gesture of a user which can be executed by means of an actuating element (10),
a first graphic object (7B) of the first set (13.1) in a first position on the display surface (12) at which the swiping gesture starts is determined,
a trajectory (14) of the actuating element (10) is detected in the detection area (11),
a second graphic object (7D) of the second set (13.2) in a second position on the display surface (12) is determined which graphic object is closest to an end point (15) of the trajectory (14), wherein the end point (15) of the trajectory (14) is the point at which the actuating element (10) leaves the detection area (11), and
when the actuating element (10) has left the detection area (11), the second graphic object (7D) is displayed at the first position and the first graphic object (7B) is displayed at the second position.

7. Method according to any one of the preceding claims,
**characterized in that**
the first set (13.1) comprises at least a first row (13.1) of graphic objects (7A-7F) arranged next to one another, and the second set (13.2) comprises at least a second row (13.2) of graphic objects (7A-7F) arranged next to one another.

8. Method according to any one of the preceding claims,
**characterized in that**
at least the second set (13.2) of graphic objects (7A-7F) comprises switching elements that can be operated.

9. Device (1) for providing a graphical user interface for a vehicle (2), comprising
a display device (4),
wherein the display device (4) can be operated in a first operating mode in which graphic objects (7A-7F) can be fully displayed on a display surface (12), the graphic objects (7A-7F) being subdivided into a first set (13.1) of graphic objects (7A-7C) and a second set (13.2) of graphic objects (7D-7F), and
wherein the display device (4) can be operated in a second operating mode in which the display surface (12) can be reduced in size, wherein the display surface (12) is subdivided into a visible (12.1) and a non-visible part (12.2) so that, after a transition from the first to the second operating mode, the graphic objects (7A-7C) of the first set (13.1) can be fully displayed on the visible part (12.1) of the display surface (12) and the graphic objects (7D-7F) of the second set (13.2) at least partially cannot be displayed on the visible part (12.2) of the display surface (12), and
a detection unit (5) by means of which an operating action of a user can be detected in the second operating mode of the display device (4),
**characterized by**
a control unit (6) by means of which the display device (4) can be controlled in such a way that, in the second operating mode, if the operating action was detected, the graphic objects (7D-7F) of the second set (13.2) can be arranged on the display surface (12) in such a way that at least one of the graphic objects (7D-7F) of the second set (13.2) can be fully displayed on the visible part (12.1) of the display surface (12).

10. Device (1) according to Claim 9,
**characterized in that**
the device (1) comprises an interior cover (9) into which the display device (4) can be lowered, wherein the first operating mode is a full-screen mode in which the display device (4) is not lowered, and the second operating mode is a partial-screen mode in which the visible part (12.1) of the display surface (12) is not lowered and the non-visible part (12.2) of the display surface (12) is lowered.

11. Device (1) according to Claim 10,
**characterized in that**
in the second operating mode, the interior cover (9) conceals the view of the non-visible part (12.2) of the display surface (12).

12. Device (1) according to Claim 10 or 11,
**characterized in that**
the interior cover (9) is part of the dashboard (16) of the vehicle (2).

13. Device (1) according to any one of Claims 10 to 12,
**characterized in that**
in the second operating mode, a detection area (11) in which the operating action can be detected is formed in a space in front of the display surface (12) of the display device (4), wherein the detection area (11) is formed in front of the visible part (12.1) of the display surface (12) and/or the interior cover (9).

14. Vehicle (2) having a device (1) according to any one of Claims 9 to 13.

## Revendications

1. Procédé pour la mise à disposition d'une interface utilisateur graphique pour un véhicule (2),
dans lequel,
dans un premier mode de fonctionnement d'un dispositif d'affichage (4), des objets graphiques (7A - 7F) sont affichés de manière entièrement visible sur une surface d'affichage (12), les objets graphiques (7A - 7F) étant divisés en une première quantité (13.1) d'objets graphiques (7A - 7C) et une seconde quantité (13.2) d'objets graphiques (7D - 7F),
dans un second mode de fonctionnement du dispositif d'affichage (4), la surface d'affichage (12) est réduite, la surface d'affichage (12) étant divisée en une partie visible (12.1) et une partie non visible (12.2), de telle sorte qu'après un passage du premier mode de fonctionnement au second mode de fonctionnement, les objets graphiques (7A - 7C) de la première quantité (13.1) sont affichés entièrement dans la partie visible (12.1) de la surface d'affichage (12) et les objets graphiques (7D - 7F) de la seconde quantité (13.2) ne sont pas affichés au moins partiellement dans la partie visible (12.1) de la surface d'affichage (12) et
dans le second mode de fonctionnement, une action d'utilisation (17) d'un utilisateur est détectée,
**caractérisé en ce que**
lorsque l'action d'utilisation a été détectée, les objets graphiques (7D - 7F) de la seconde quantité (13.2) sont disposés de telle façon sur la surface d'affichage (12) qu'au moins un des objets graphiques (7D - 7F) de la seconde quantité (13.2) est affiché entièrement dans la partie visible (12.1) de la surface d'affichage (12).

2. Procédé selon la revendication 1,
**caractérisé en ce que**
dans le second mode de fonctionnement, la partie non visible (12.2) de la surface d'affichage (12) est masquée par un recouvrement d'habitacle (9) du véhicule (2).

3. Procédé selon la revendication 2,
**caractérisé en ce que**
le dispositif d'affichage (4), lors du passage du premier mode de fonctionnement au second mode de fonctionnement, est déplacé de telle façon que le recouvrement d'habitacle (9) masque la partie non visible (12.2) de la surface d'affichage (12), la seconde quantité (13.2) d'objets graphiques (7D - 7F) étant disposée dans la partie non visible (12.2) de la surface d'affichage (12).

4. Procédé selon l'une quelconque des revendications 1, 2 ou 3,
**caractérisé en ce que**
l'action d'utilisation est un geste (17) d'un utilisateur,
une zone de détection (11) est formée devant la partie visible (12.1) et/ou la partie non visible (12.2) de la surface d'affichage (12) dans le second mode de fonctionnement, le geste (17) étant détecté dans la zone de détection (11).

5. Procédé selon l'une quelconque des revendications précédentes,
**caractérisé en ce que**
la première quantité (13.1) d'objets graphiques (7A - 7F) comprend le même nombre d'objets graphiques (7A - 7F) que la seconde quantité (13.2) d'objets graphiques (7A - 7F),
les positions des objets graphiques (7A - 7F) de la première (13.1) et de la seconde quantité (13.2) sur la surface d'affichage (12) sont déterminées et,
lorsque l'action d'utilisation a été détectée, au moins les objets graphiques (7D - 7F) de la seconde quantité (13.2) sont affichés sur les positions des objets graphiques (7A - 7C) de la première quantité (13.1).

6. Procédé selon la revendication 4,
**caractérisé en ce que**
l'action d'utilisation est un geste de glissement d'un utilisateur pouvant être effectué au moyen d'un élément d'actionnement (10),
un premier objet graphique (7B) de la première quantité (13.1) est déterminé dans une première position sur la surface d'affichage (12), à partir duquel le geste de glissement commence,
une trajectoire (14) de l'élément d'actionnement (10) est détectée dans la zone de détection (11),
un deuxième objet graphique (7D) de la seconde quantité (13.2) est déterminé dans une deuxième position sur la surface d'affichage (12), lequel se trouve le plus près d'un point final (15) de la trajectoire (14), le point final (15) de la trajectoire (14) étant le point auquel l'élément d'actionnement (10) quitte la zone de détection (11) et,
une fois que l'élément d'actionnement (10) a quitté la zone de détection (10), le deuxième objet graphique (7D) est affiché sur la première position et le premier objet graphique (7B) est affiché sur la deuxième position.

7. Procédé selon l'une quelconque des revendications précédentes,
**caractérisé en ce que**
la première quantité (13.1) comprend au moins une première rangée (13.1) d'objets graphiques (7A - 7F) disposés les uns à côté des autres et la seconde quantité (13.2) comprend au moins une deuxième rangée (13.2) d'objets graphiques (7A - 7F) disposés les uns à côté des autres.

8. Procédé selon l'une quelconque des revendications précédentes,
**caractérisé en ce que**
au moins la seconde quantité (13.2) d'objets graphiques (7A - 7F) comprend des éléments de commutation pouvant être utilisés.

9. Dispositif (1) pour la mise à disposition d'une interface utilisateur graphique pour un véhicule (2), comprenant
un dispositif d'affichage (4),
le dispositif d'affichage (4) pouvant être utilisé dans un premier mode de fonctionnement, dans lequel des objets graphiques (7A - 7F) peuvent être affichés entièrement sur une surface d'affichage (12), les objets graphiques (7A - 7F) étant divisés en une première quantité (13.1) d'objets graphiques (7A - 7C) et une seconde quantité (13.2) d'objets graphiques (7D - 7F) et
le dispositif d'affichage (4) pouvant être utilisé dans un second mode de fonctionnement, dans lequel la surface d'affichage (12) peut être réduite, la surface d'affichage (12) étant divisée en une partie visible (12.1) et une partie non visible (12.2), de telle sorte qu'après un passage du premier au second mode de fonctionnement, les objets graphiques (7A - 7C) de la première quantité (13.1) peuvent être affichés entièrement dans la partie visible (12.1) de la surface d'affichage (12) et les objets graphiques (7D - 7F) de la seconde quantité (13.2) peuvent ne pas être affichés au moins partiellement dans la partie visible (12.1) de la surface d'affichage (12) et
une unité de détection (5), au moyen de laquelle une action d'utilisation d'un utilisateur peut être détectée dans le second mode de fonctionnement du dispositif d'affichage (4),
**caractérisé par**
une unité de commande (6), au moyen de laquelle le dispositif d'affichage (4) peut être commandé de telle façon que les objets graphiques (7D - 7F) de la seconde quantité (13.2) dans le second mode de fonctionnement, lorsque l'action d'utilisation a été détectée, peuvent être disposés de telle façon sur la surface d'affichage (12) qu'au moins un des objets graphiques (7D - 7F) de la seconde quantité (13.2) peut être affiché entièrement dans la partie visible (12.1) de la surface d'affichage (12).

10. Dispositif (1) selon la revendication 9,
**caractérisé en ce que**
le dispositif (1) comprend un recouvrement d'habitacle (9), dans lequel le dispositif d'affichage (4) peut être escamoté, le premier mode de fonctionnement étant un mode plein écran, dans lequel le dispositif d'affichage (4) n'est pas escamoté et le second mode de fonctionnement étant un mode d'écran partiel, dans lequel la partie visible (12.1) de la surface d'affichage (12) n'est pas escamotée et la partie non visible (12.2) de la surface d'affichage (12) est escamotée.

11. Dispositif (1) selon la revendication 10,
**caractérisé en ce que**
dans le second mode de fonctionnement, le recouvrement d'habitacle (9) masque la vue sur la partie non visible (12.2) de la surface d'affichage (12).

12. Dispositif (1) selon la revendication 10 ou 11,
**caractérisé en ce que**
le recouvrement d'habitacle (9) est une partie du tableau de bord (16) du véhicule (2).

13. Dispositif (1) selon l'une quelconque des revendications 10 à 12,
**caractérisé en ce que**
dans le second mode de fonctionnement, une zone de détection (11) est formée dans un espace devant la surface d'affichage (12) du dispositif d'affichage (4), dans laquelle l'action d'utilisation peut être détectée, la zone de détection (11) étant formée devant la partie visible (12.1) de la surface d'affichage (12) et/ou devant le recouvrement d'habitacle (9).

14. Véhicule (2) comprenant un dispositif (1) selon l'une quelconque des revendications 9 à 13.
